# EUROPÄISCHE PATENTSCHRIFT

(11) **EP 3 093 259 B1**
(45) Veröffentlichungstag und Bekanntmachung des Hinweises auf die Patenterteilung: **09.10.2019**
(21) Anmeldenummer: 16169204.1
(22) Anmeldetag: 11.05.2016
(51) Int. Cl.: B65G 51/03, F15B 15/24

(54) **PNEUMATISCHES VERSTELLSYSTEM**
PNEUMATIC ADJUSTING SYSTEM
SYSTEME DE REGLAGE PNEUMATIQUE

(30) Priorität: 13.05.2015 CH 6722015
(43) Veröffentlichungstag der Anmeldung: 16.11.2016
(73) Patentinhaber: M. Tanner AG, 8308 Illnau (CH)
(72) Erfinder: Tanner, Marcel, 8303 Bassersdorf (CH)
(74) Vertreter: Schaad, Balass, Menzl & Partner AG

(56) Entgegenhaltungen:
- EP-A1- 1 277 677
- EP-A1- 2 848 558
- WO-A1-2010/006461
- WO-A1-2011/029949
- DE-A1-102009 016 593
- DE-A1-102011 118 519

## Beschreibung

Die Erfindung betrifft ein pneumatisches Verstellsystem zum Verstellen des gegenseitigen Abstands von zumindest zwei Führungsvorrichtungen, beispielsweise Führungsschienen für den Ab- bzw. Weitertransport von etwa Vorformlingen für Kunststoffbehälter, von einem Rollensortierer zur weiteren Bearbeitung in beispielsweise einer nachgeschalteten Inspektions- und Auswerfereinheit. Zur Ein- bzw. Verstellung des gegenseitigen Abstands der Führungsschienen, auf denen die Vorformlinge zum Transport jeweils mit ihrem Kragen aufliegen - also zur Breiteneinstellung, wie sie etwa bei einem Wechsel der Vorformlingsgrösse bzw. der Breite des Vorformlingskragens erforderlich wird - war es bislang üblich, die entsprechenden Breitenjustiereinheiten entlang der Transportstrecke jeweils manuell zu betätigen, d.h. über entsprechende Justierschrauben einzeln zu verstellen, wie es etwa in der EP 2 848 558 A1 beschrieben wird.

Diese Vorgehensweise hat sich in der Praxis an sich bewährt; zuletzt wurde allerdings, insbesondere auch im Hinblick auf die hohen Stillstandskosten der nachgeschalteten Streckblas- und Abfüllanlagen, der Wunsch nach einer (noch) effizienteren Umstellungsmöglichkeit von einer Vorformlingsgrösse auf eine andere, lauter.

Die EP 1277677 A1 offenbart ein Verstellsystem nach dem Oberbegriff des Anspruchs 1.

Es ist daher die Aufgabe der vorliegenden Erfindung, ein Verstellsystem bereitzustellen, mittels dem ein Wechsel von einer Vorformlingsgrösse auf eine andere, bei im Wesentlichen gleicher Zuverlässigkeit und Genauigkeit, zeitlich schneller bewerkstelligt werden kann.

Diese Aufgabe wird erfindungsgemäss gelöst durch ein Verstellsystem nach Anspruch 1, zum Einstellen des gegenseitigen Abstands von zumindest zwei Führungsvorrichtungen für den Transport von etwa Vorformlingen für Kunststoffbehälter, wobei die zumindest zwei Führungsvorrichtungen jeweils mit einer Einstelleinheit verbunden sind, wobei die Einstelleinheit zumindest jeweils ein kolbenartiges Element umfasst, welches auf pneumatische Weise zwischen einem ersten Anschlag und einem zweiten Anschlag innerhalb der Einstelleinheit hin und her bewegbar ist, wobei die Einstelleinheit (10, 10') jeweils eine Luftkammer (13a, 13b; 13a', 13b') definiert, in welcher jedenfalls Teile des kolbenartigen Elements (12, 12') beweglich gelagert sind, wobei die Einstelleinheit (10, 10') jeweils ein wellenartiges Element (14, 14') aufweist, an welchem jeweils die Führungsvorrichtung (11, 11') montiert ist, dadurch gekennzeichnet, dass zumindest einer der beiden Anschläge (15a, 15a'; 16, 16a') der Einstelleinheit (10, 10`) verstellbar ausgebildet ist und das nach aussen hin liegende Ende des wellenartigen Elements (14, 14') einen Aussengewindeabschnitt (14c) aufweist, welcher mit einem korrespondierenden Gewindeabschnitt einer Mutter (52) zusammenwirkt, welche auf das nach aussen hin liegende Ende des wellenartigen Elements (14) aufgebracht ist, wobei die Mutter (52) von aussen her betätigbar ist und das wellenartige Element (14) so horizontal relativ zu dem kolbenartigen Element (12, 12') verstellbar ist, wobei ein Mass (M) gegenüber dem kolbenartigen Element (12, 12') einstellbar ist, wobei wobei das kolbenartige Element (12, 12') in Form einer Kolbenstange ausgebildet ist, welche einen Schaftteil (12a, 12a') und einen Kolbenteil (12b, 12b') aufweist und wobei der Schaftteil (12a, 12a') des kolbenartigen Elements (12, 12') einen Hohlschaft aufweist, welcher das wellenartige Element (14, 14') jedenfalls teilweise umgibt.

Die Führungsvorrichtungen sind dabei bevorzugt einmal in Form von zwei sich spiegelsymmetrisch gegenüberliegenden Z-Profilen ausgebildet (d.h. zur Auflage des Kragens der Vorformlinge auf der Oberseite und ggf. zum Abrutschen der Vorformlinge entlang der Transportstrecke) sowie weiter vorzugsweise in Form von zwei sich spiegelsymmetrisch gegenüberliegenden L-Profilen mit daran befestigten, abgeknickten Blechen (d.h. zur seitlichen Führung der zylindrischen Vorformlingskörper) ausgebildet. Bei einer Umstellung von Vorformlingen gemäss PCO 28 mm (Standard für PET-Vorformlinge, PCO = "Plastic Closure Only") auf Vorformlinge gemäss WH 38 mm (WH = "Weithals") muss beispielsweise auf jeder Seite ein Hub von 5 mm überwunden werden (d.h. jeweils nach aussen).

Erfindungsgemäss definiert die Einstelleinheit jeweils eine Luftkammer, in welcher jedenfalls Teile des kolbenartigen Elements beweglich gelagert sind. Erfindungsgemäss ist dabei das kolbenartige Element in Form einer Kolbenstange ausgebildet, welche einen Schaftteil und einen Kolbenteil aufweist. Weiter vorzugsweise unterteilt insbesondere der Kolbenteil der Kolbenstange die Luftkammer in eine erste Luftkammerseite (nach aussen hin liegend) und eine zweite Luftkammerseite (nach innen hin liegend). Der Kolbenteil stösst dabei an die Unter- sowie an die Oberseite der Luftkammer an und kann, zusammen mit dem Schaftteil, horizontal gleitend in der Luftkammer hin und her bewegt werden. Bevorzugt sind die erste und die zweite Luftkammerseite jeweils mit einer pneumatischen Versorgungseinrichtung verbunden, so dass jede der beiden Luftkammerseiten über entsprechende Leitungen oder Kanäle separat mit Druckluft beaufschlagt werden kann, so dass ein Hub des Kolbens, nach aussen oder nach innen, ausgeführt werden kann. Die pneumatische Versorgungseinrichtung ist dabei vorzugsweise abnehmbar an der Aussenseite der jeweiligen Einstelleinheit angeordnet. Die pneumatischen Versorgungseinrichtungen (d.h. von sämtlichen Einstelleinheiten entlang der Transportstrecke) werden bevorzugt mittels eines zentralen Hebels betätigt, so dass der jeweils eingestellte Kolbenhub bei allen Einstelleinheiten gleichzeitig erfolgen kann.

Erfindungsgemäss ist zumindest einer der beiden Anschläge der Einstelleinheit verstellbar ausgebildet. Vorzugsweise ist dies der nach aussen liegende Anschlag, da dieser leichter von einer Bedienperson betätigt werden kann. Allerdings ist auch eine verstellbare Ausbildung des nach innen liegenden Anschlags denkbar.

Weiter vorzugsweise ist der zumindest eine verstellbare Anschlag der Einstelleinheit an einem Hubeinstellelement ausgebildet. Das Hubeinstellelement und seine konkret als Anschlag dienende Stirnfläche kann dabei vermittels eines entsprechenden Gewindes in die erste Luftkammerseite (d.h. die nach aussen hin liegende Luftkammerseite) hineingedreht werden. Das Hubeinstellelement weist diesbezüglich an seinem nach aussen abragenden Ende eine drehknopfartige Ausgestaltung auf und ist weiterhin bevorzugt von einem Kunststoffdeckel verschlossen.

Erfindungsgemäss weist die Einstelleinheit ein wellenartiges Element auf, welches relativ zu dem kolbenartigen Element beweglich ist und mittels welchem ein Mass gegenüber dem kolbenartigen Element einstellbar ist. Erfindungsgemäss weist dabei der Schaftteil des kolbenartigen Elements einen Hohlschaft auf, welcher das wellenartige Element jedenfalls teilweise umgibt. Weiter vorzugsweise sind das kolbenartige Element und das wellenartige Element gleitend zueinander beweglich, d.h. das wellenartige Element gleitet innerhalb des Hohlschafts des kolbenartigen Elements. Erfindungsgemäss weist das nach aussen hin liegende Ende des wellenartigen Elements einen Gewindeabschnitt auf, welcher mit einem korrespondierenden Gewindeabschnitt einer Mutter zusammenwirkt, welche auf das nach aussen hin liegende Ende des wellenartigen Elements aufgebracht ist und vorzugsweise von dem Schaftteil des kolbenartigen Elements durch ein Scheibenelement getrennt ist. Die Mutter kann, durch Abnehmen des vorerwähnten Kunststoffdeckels, von aussen her betätigt und das wellenartige Element so horizontal verstellt werden.

Erfindungsgemäss ist an dem wellenartigen Element, vorzugsweise an einem Befestigungsabschnitt an dem nach innen liegenden Endbereich desselben, jeweils die Führungsvorrichtung (d.h. entweder mit dem Z-Profil oder aber mit dem L-Profil mit dem daran befestigten abgeknickten Blech) montiert.

Weiter vorzugsweise weist das kolbenartige Element, bevorzugt dessen Schaftteil, an seinem der Führungsvorrichtung zugewandten Ende ein Hülsenelement auf. Zwischen dem Hülsenelement und dem dem Hülsenelement gegenüberliegenden Befestigungsabschnitt des wellenartigen Elements ist weiter bevorzugt eine Feder angeordnet, welche sich an dem Hülsenelement sowie an dem Befestigungsabschnitt abstützt und so eine Vorspannung erzeugt.

In einer weiteren bevorzugten Ausführungsform der vorliegenden Erfindung umgibt das Hubeinstellelement das kolbenartige Element und das wellenartige Element jedenfalls teilweise und ist relativ zu diesen beweglich. Weiter vorzugsweise sind das Hubeinstellelement und das kolbenartige Element gleitend zueinander beweglich. Die Gewindeverbindung des Hubeinstellelements wird mit einem korrespondierenden Bereich eines Aussenwandungsabschnitts der Einstelleinheit realisiert. Bevorzugt ist das kolbenartige Element koaxial zu dem wellenartigen Element ausgebildet (sowie zu der horizontalen Achse X1 der Einstelleinheit) und das Hubeinstellelement ist jedenfalls koaxial zu dem Schaftteil des kolbenartigen Elements ausgebildet (sowie zu dem wellenartigen Element und zu der horizontalen Achse X₁ der Einstelleinheit).

Aufgrund der vorbeschriebenen Ausgestaltung kann also die jeweilige Bedienperson von der Aussenseite der Anlage her den Hub des kolbenartigen Elements bzw. des Kolbenteils innerhalb der Luftkammer der Einstelleinheit einstellen und darüber hinaus das Mass zwischen dem kolbenartigen Element und dem Befestigungsabschnitt des wellenartigen Elements.

Auf diese Weise kann zudem eine äusserst hohe Variabilität bei der Umstellung von einer Vorformlingsgrösse auf eine andere Vorformlingsgrösse bereitgestellt werden.

In einer noch weiteren bevorzugten, nicht erfindungsgemässen, Ausführungsform umfasst das Verstellsystem zusätzlich eine Höhenverstellvorrichtung, welche zumindest aufweist: einen schwenkbar gelagerten Hebelarm, an dessen freiem Ende, vorzugsweise an dessen Unterseite, eine Höhenführungseinheit angeordnet ist; einen im Wesentlichen senkrecht vom Hebelarm (nach unten) abstehenden U-förmigen Bügel, welcher beweglich zwischen zwei Kugelkopfelementen, und vorzugsweise jeweils auf den Kugelkopfelementen beweglich angeordneten Scheiben, gelagert ist; wobei die Kugelkopfelemente vorzugsweise auf einer horizontal beweglichen Längsverstelleinrichtung angeordnet sind, wobei bevorzugt zumindest eines der Kugelkopfelemente auf der horizontal beweglichen Längsverstelleinrichtung federvorgespannt ist; und wobei aus der Ausgangsstellung der Höhenverstellvorrichtung heraus eine horizontale Vorwärtsbewegung der Längsverstelleinrichtung, d.h. im Wesentlichen in Richtung der Höhenführungseinheit, über eine Kippbewegung des U-förmigen Bügels sowie über eine (praktisch gleichzeitige) Schwenkbewegung des Hebelarms in eine im Wesentlichen vertikale Aufwärtsbewegung des freien Endes des Hebelarms sowie der Höhenführungseinheit umgesetzt wird.

Die Höhenverstellvorrichtung kann jedoch, für sich genommen, auch einen separaten Aspekt bilden, etwa als: Höhenverstellvorrichtung für eine Transportstrecke für Vorformlinge für Kunststoffbehälter, welche zumindest aufweist: einen schwenkbar gelagerten Hebelarm, an dessen freiem Ende, vorzugsweise an dessen Unterseite, eine Höhenführungseinheit angeordnet ist; einen im Wesentlichen senkrecht vom Hebelarm (nach unten) abstehenden U-förmigen Bügel, welcher beweglich zwischen zwei Kugelkopfelementen, und vorzugsweise jeweils auf den Kugelkopfelementen beweglich angeordneten Scheiben, gelagert ist; wobei die Kugelkopfelemente vorzugsweise auf einer horizontal beweglichen Längsverstelleinrichtung angeordnet sind, wobei bevorzugt zumindest eines der Kugelkopfelemente auf der horizontal beweglichen Längsverstelleinrichtung federvorgespannt ist; und wobei aus der Ausgangsstellung der Höhenverstellvorrichtung heraus eine horizontale Vorwärtsbewegung der Längsverstelleinrichtung, d.h. im Wesentlichen in Richtung der Höhenführungseinheit, über eine Kippbewegung des U-förmigen Bügels sowie eine (praktisch gleichzeitige) Schwenkbewegung des Hebelarms in eine im Wesentlichen vertikale Aufwärtsbewegung des freien Endes des Hebelarms sowie der Höhenführungseinheit umgesetzt wird.

Die Längsverstelleinrichtung der Höhenverstellvorrichtung weist dabei vorzugsweise eine (wiederum bevorzugt von aussen betätigbare) spindelförmige Konfiguration auf, wobei auf dem glatten Schaftabschnitt sich gegenüberliegend - getrennt durch den U-förmigen Bügel sowie die beiden beweglich angeordneten Scheiben (und ggf. ein vom U-förmigen Bügel umschlossenes Gleitteil) - die beiden Kugelkopfelemente angeordnet sind.

Das vorzugsweise am freien Ende des glatten Schaftabschnitts der Längsverstelleinrichtung angeordnete (in der Regel etwas kleinere) zweite Kugelkopfelement ist dabei regelmässig fix montiert. Das andere (in der Regel etwas grössere), erste, Kugelkopfelement ist federvorgespannt, wobei sich die Feder an einer hinteren Anschlagfläche des ersten Kugelkopfelements und einem Innenwandungsabschnitt des Gehäuses der Höhenverstellvorrichtung abstützt.

Die Höhenführungseinheit kann wahlweise in Form eines Gestänges oder in Form eines C-Profils oder auf eine andere geeignete Weise, ausgebildet sein.

Beispielhafte Ausführungsformen der vorliegenden Erfindung werden im Hinblick auf eine bessere Anschaulichkeit anhand der beiliegenden Zeichnungen illustriert.

Es zeigt:
- Fig. 1: eine perspektivische Ansicht eines erfindungsgemässen Verstellsystems mit einem eine erste Grösse aufweisenden Vorformling und der nicht erfindungsgemässen Höhenverstellvorrichtung in ihrer Ausgangsstellung (keine Auslenkung);
- Fig. 2: eine seitliche Ansicht eines erfindungsgemässen Verstellsystems mit einem eine erste Grösse aufweisenden Vorformling und der nicht erfindungsgemässen Höhenverstellvorrichtung in ihrer Ausgangsstellung (keine Auslenkung);
- Fig. 3: eine perspektivische Ansicht eines erfindungsgemässen Verstellsystems mit einem eine zweite Grösse aufweisenden Vorformling und der nicht erfindungsgemässen Höhenverstellvorrichtung in ihrer Endstellung (maximale Auslenkung);
- Fig. 4: eine seitliche Ansicht eines erfindungsgemässen Verstellsystems mit einem eine zweite Grösse aufweisenden Vorformling und der nicht erfindungsgemässen Höhenverstellvorrichtung in ihrer Endstellung (maximale Auslenkung);
- Fig. 5: eine seitliche Querschnittsansicht einer erfindungsgemässen Einstelleinheit (zur Breiteneinstellung) mit minimalem Hub des kolbenartigen Elements;
- Fig. 6: eine seitliche Querschnittsansicht einer erfindungsgemässen Einstelleinheit (zur Breiteneinstellung) mit maximalem Hub des kolbenartigen Elements;
- Fig. 7: eine Frontalansicht der Aussenseite zweier erfindungsgemässer Einstelleinheiten (zur Breiteneinstellung) sowie der Aussenseite einer nicht erfindungsgemässen Höhenverstellvorrichtung;
- Fig. 8: eine seitliche Querschnittsansicht einer nicht erfindungsgemässen Höhenverstellvorrichtung in ihrer Ausgangsstellung (keine Auslenkung).

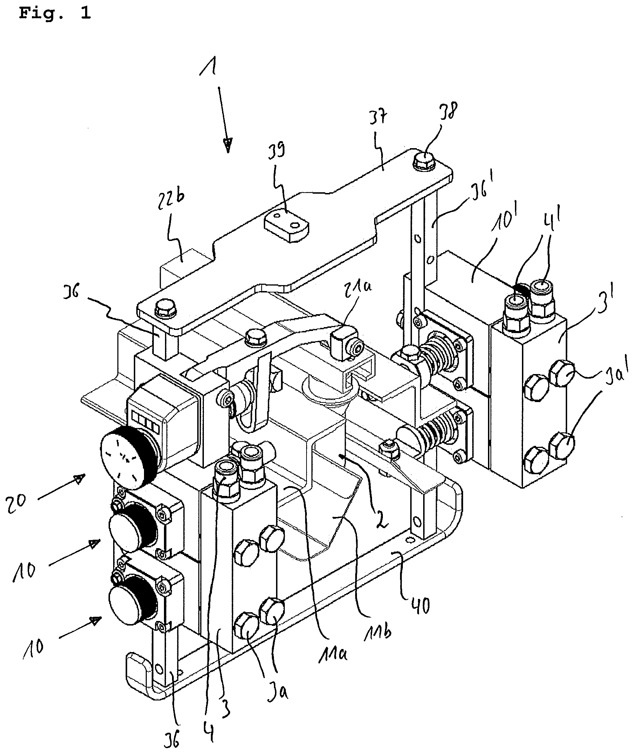

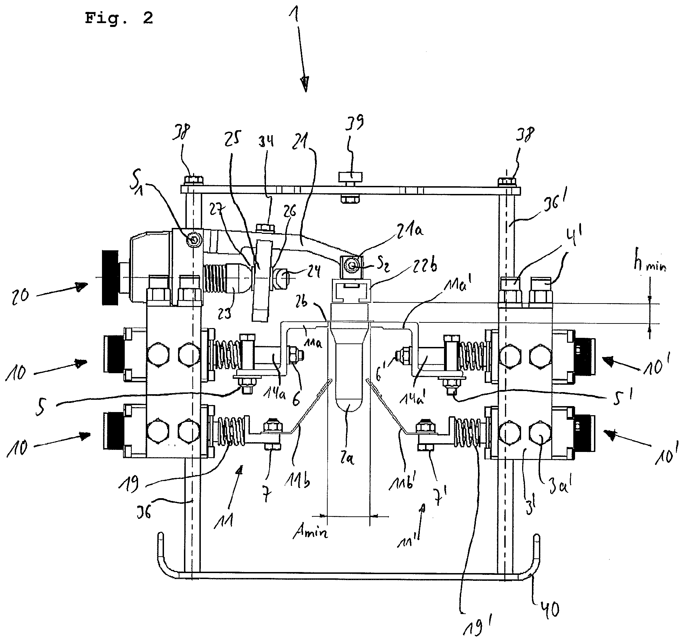

In den **Fig. 1** **und** **2** wird eine beispielhafte Ausführungsform des erfindungsgemässen Verstellsystems 1 dargestellt mit einem Vorformling 2 kleinerer Grösse (zum Beispiel der obengenannte PCO 28 mm). Das Verstellsystem 1 befindet sich in seiner Arbeitsstellung. Der Rahmen des Verstellsystems 1 wird gebildet aus den Halterungsstangen 36, 36', welche an ihren oberen Enden über eine Querstrebe 37 verbunden, d.h. mit entsprechenden Schrauben 38 verschraubt, sind. Auf der Querstrebe 37 befindet sich eine Befestigungsvorrichtung 39, welche gegebenenfalls zur Befestigung von Längsstreben dient, welche entlang einer Transportstrecke verlaufen und eine Verbindung zu weiteren Verstellsystemen herstellen (nicht dargestellt). An ihrem unteren Ende sind die Halterungsstangen 36, 36' über einen Kopfschutz 40 verbunden, welcher abgerundete freie Enden aufweist, um insbesondere Kopfverletzungen bei den Bedienpersonen zu vermeiden. Der Kopfschutz 40 kann im Übrigen eine gummierte Unterseite aufweisen.

An den Halterungsstangen 36, 36' sind insbesondere die Einstelleinheiten 10, 10' montiert, welche für eine horizontale Verstellung der Führungsvorrichtungen 11, 11' dienen. Die sich jeweils gegenüberliegenden Einstelleinheiten 10 und 10' umfassen dabei jeweils analog ausgebildete Führungsvorrichtungen 11, 11'. Die beiden unteren Einstelleinheiten 10, 10' umfassen als Führungsvorrichtung 11, 11' jeweils ein L-Profil 11b, 11b' , an welchem ein nach oben abgeknicktes Blech angeordnet ist, welches zur seitlichen Führung des zylindrischen Körpers 2a des Vorformlings 2 dient. Das L-Profil mit dem abgeknickten Blech 11b, 11b' ist dabei jeweils mittels einer Schraubverbindung 7, 7' an der Einstelleinheit 10, 10' befestigt.

Die beiden oberhalb angeordneten Einstelleinheiten 10, 10' weisen als Führungsvorrichtung 11, 11' jeweils (wiederum spiegelsymmetrisch angeordnete) Z-Profile 11a, 11a' auf. Diese sind mittels zweier Schraubverbindungen 5, 5' sowie 6, 6' mit der jeweiligen Einstelleinheit 10, 10' verbunden. Die Schraubverbindung 6, 6' erfolgt dabei an einem Befestigungsabschnitt 14a, 14a' der Einstelleinheit 10, 10'. Auf der Oberseite der beiden sich gegenüberliegenden Z-Profile 11a, 11a' liegt der Vorformling 2 mit seinem Kragen 2b auf, sodass dieser entlang einer, in der Regel geneigten, Transportstrecke weiter- beziehungsweise abtransportiert werden kann.

Zwischen den Führungsvorrichtungen 11, 11' und der nach innen liegenden Wandung der Einstelleinheit 10, 10' ist jeweils eine Feder 19, 19' angeordnet, deren Funktion weiter unten erläutert wird. Oberhalb der Einstelleinheit 10, 10' mit dem Z-Profil 11a, 11a' ist eine Höhenverstellvorrichtung 20 angeordnet, hier auf der linken Seite, mit welcher eine Höhenführungseinheit 22, (hier in Form eines C-Profils 22b) in vertikaler Richtung gegenüber der Oberseite bzw. Mündungsöffnung des Vorformlings 2 verstellt werden kann. Der Abstand von der Unterseite des C-Profils 22b zum Kragen 2b des Vorformlings 2 ist hier minimal und wird entsprechend mit hₘᵢₙ angegeben.

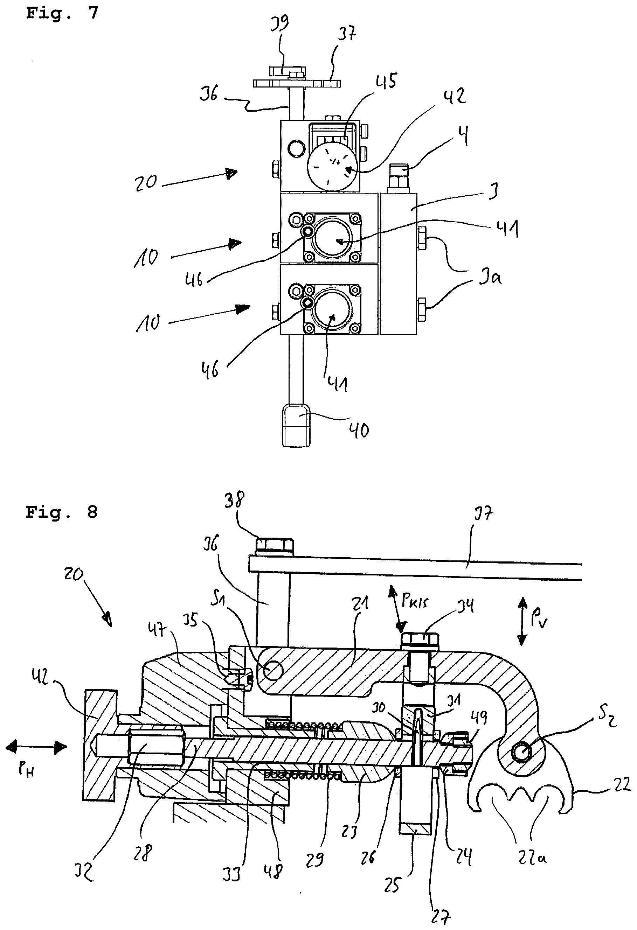

Die nicht erfindungsgemässe Höhenverstellvorrichtung 20 ist wiederum an der Halterungsstange 36 montiert und umfasst ein Hebelarm 21, welcher um eine Schwenkachse S₁ schwenkbar gelagert ist. An dem freien Ende 21a des Hebelarms ist das C-Profil 22b ebenfalls schwenkbar gelagert und zwar bezüglich der (zweiten) Schwenkachse S₂. Etwa in der Mitte des Hebelarmes 21 ist des Weiteren ein im Wesentlichen senkrecht nach unten abragender U-förmiger Bügel 25 vorgesehen, welcher zwischen einem ersten Kugelkopfelement 23 und einem zweiten Kugelkopfelement 24 beziehungsweise zwischen zwei jeweils dazwischen liegenden Scheiben 26 und 27 angeordnet ist. Über diese Höhenverstellvorrichtung 20 kann die vertikale Position des C-Profils 22b verändert werden (d.h. in diesem Fall von der gezeigten Ausgangsstellung aus in eine höhere vertikale Position bewegt werden). Die genaue Funktionsweise der Höhenverstellvorrichtung 20 wird weiter unten, im Zusammenhang mit **Fig. 8** im Detail erläutert.

Man erkennt weiterhin, dass an der Aussenseite der Einstelleinheiten 10, 10' jeweils eine pneumatische Versorgungseinrichtung 3, 3' angeordnet ist, welche konkret mittels der Schrauben 3a, 3a' seitlich mit den Einstelleinheiten 10, 10' verschraubt ist. Auf der Oberseite der pneumatischen Versorgungseinrichtung 3, 3' sind jeweils Anschlüsse für Druckluft 4, 4' vorgesehen. Der Abstand zwischen den beiden Z-Profilen 11a und 11a' für die Aufnahme beziehungsweise Halterung des (kleineren) Vorformlings 2 wird hier mit Aₘᵢₙ angegeben.

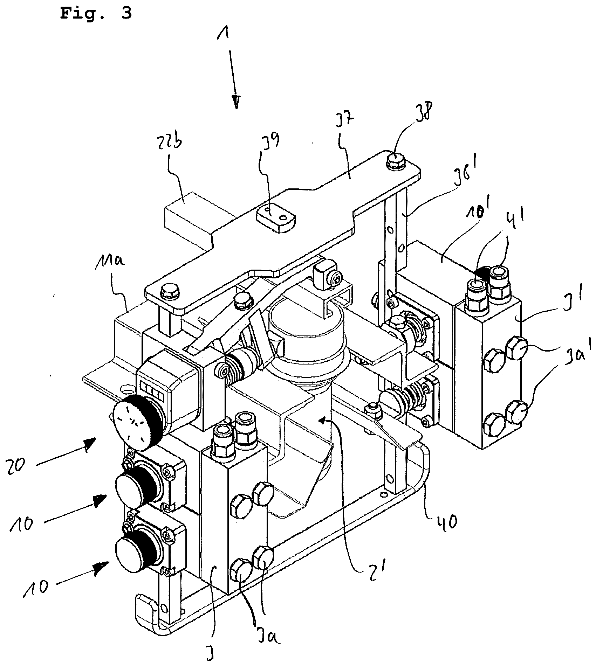

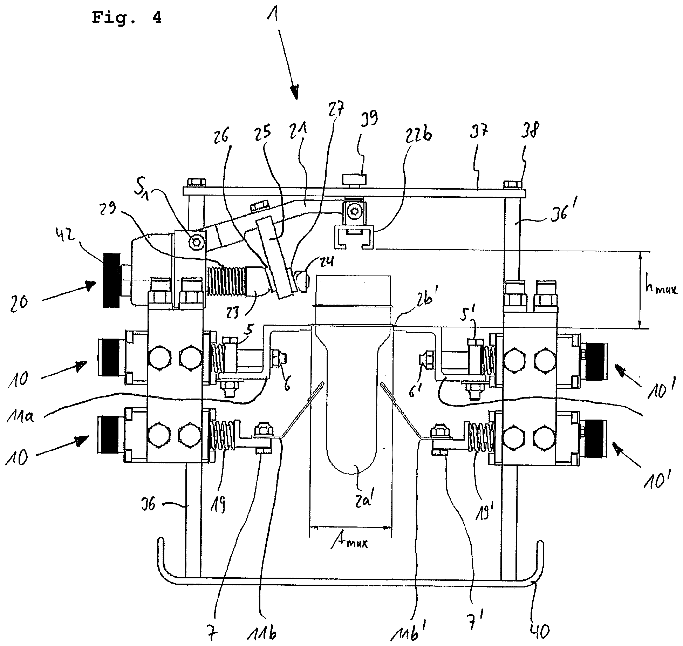

In den **Fig. 3** und **4** wird nun das erfindungsgemässe Verstellsystem 1 mit einem grösseren· Vorformling 2' gezeigt (z.B. einem Vorformling gemäss WH 35 mm). Das erfindungsgemässe Verstellsystem 1 wurde dabei gegenüber seiner in den Figuren 1 und 2 dargestellten Ausgangs- bzw. Arbeitsstellung (Aₘᵢₙ, hₘᵢₙ) in eine maximale Stellung gebracht (Aₘₐₓ, hₘₐₓ). Der Abstand Aₘₐₓ ist bedingt durch den breiteren Kragen 2b' des Vorformlings 2', wobei auch die Seitenführungen 11b, 11b' (das heisst jeweils die L-Profile mit dem nach oben abgeknicktem Blech 11b, 11b') einen grösseren wechselseitigen Abstand aufweisen, da auch der Durchmesser des zylindrischen Körpers 2a' des Vorformlings 2' einen grösseren Durchmesser aufweist.

Man erkennt des Weiteren, dass die Federn 19, 19', welche jeweils zwischen der Einstelleinheit 10, 10' und der Führungsvorrichtung 11, 11' beziehungsweise dem entsprechenden Befestigungsabschnitt 14a, 14a' der Einstelleinheit 10, 10' angeordnet sind, jeweils zusammengedrückt wurden.

Auch die Höhenverstellvorrichtung 20 wurde aus ihrer in den **Fig. 1** **und** **2** gezeigten Ausgangsstellung heraus bewegt. Der Abstand von der Unterseite des C-Profils 22b zum Kragen 2b' des grösseren Vorformlings 2' beträgt, wie vorstehend erwähnt, nunmehr hₘₐₓ. Dies ist bedingt durch die Umstellung auf eine entsprechend grössere Flaschenmündung; nach abgeschlossener Umstellung kann das C-Profil 22b allerdings wieder in eine Position gebracht werden, in welcher es - entsprechend der in den Figuren 1 und 2 gezeigten Position - beinahe an der Mündungsöffnung des Vorformlings anliegt, um eine genaue Höhenführung zu gewährleisten.

Der Hebelarm 21 der Höhenverstellvorrichtung 20 hat sich entsprechend nach oben bewegt und wurde um die (erste) Schwenkachse S₁ verschwenkt. Dies wurde erreicht, indem die Höhenverstellvorrichtung 20 über ihren Drehknopf 42 verstellt wurde und zwar derart, dass das erste Kugelelement 23 horizontal in Richtung des C-Profils 22b bewegt wurde, was ein Verkippen des U-förmigen Bügels 25 zusammen mit einer Gleitbewegung der jeweils anliegenden Scheiben 26, 27 ausgelöst hat sowie eine gleichzeitige Schwenkbewegung des U-förmigen Bügels 25 zusammen mit dem Hebelarm 21 relativ zu der Schwenkachse S₁. Diese Bewegung wurde entsprechend umgesetzt in eine vertikale Bewegung des am freien Ende 21a des Hebelarms (schwenkbar) befestigten C-Profils 22b (die Anordnung des C-Profils 22b an der Schwenkachse S₂ bewirkt, dass das C-Profil 22b beziehungsweise die Unterseite des C-Profils parallel zu der Oberseite bzw. der Mündungsöffnung des Vorformlings 2' bleibt).

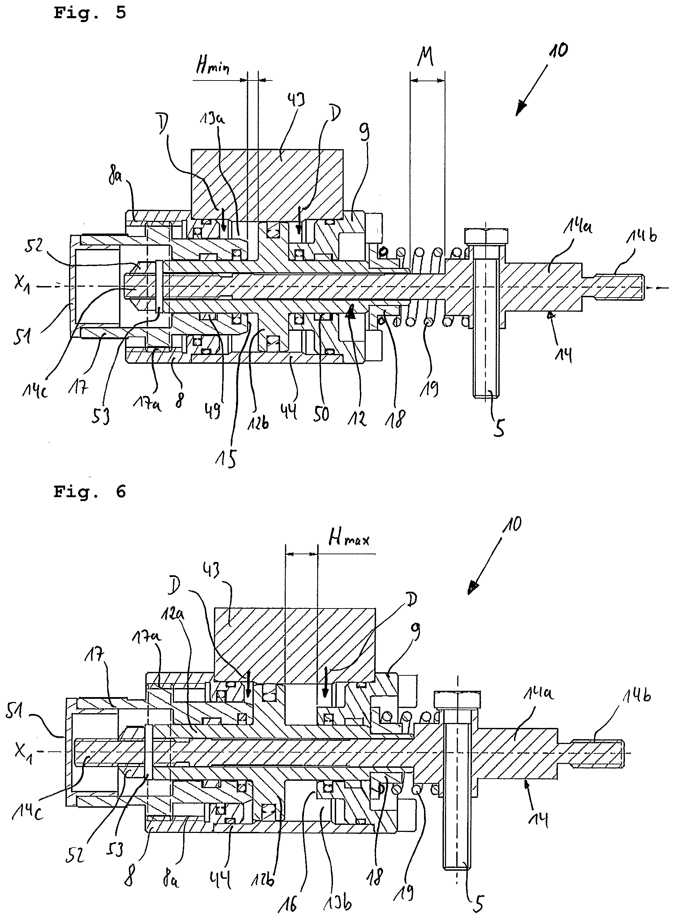

In den **Fig. 5** und **6** wird im Folgenden beispielhaft eine erfindungsgemässe Einstelleinheit 10, 10' in zwei verschiedenen Positionen gezeigt und zwar einmal mit einem minimalen Hub (Hₘᵢₙ) und einmal mit einem maximalen Hub (Hₘₐₓ) für die Umstellung von einer Vorformlingsgrösse auf eine andere Vorformlingsgrösse. Ausserdem kann man erkennen, dass sich die beiden **Fig. 5 und 6** auch hinsichtlich des gegenseitigen Abstands zwischen der Rückseite des Befestigungsabschnitts 14a und der Vorderkante des kolbenartigen Elements 12, welche hier als Mass M angegeben wird, unterscheiden.

Die genaue Funktionsweise der Einstelleinheit 10, 10' wird im Folgenden näher erläutert: Das Aussenwandungsteil 8 und das Innenwandungsteil 9 bilden zusammen mit der Oberseite des Mittelwandteils 43 sowie mit der Unterseite des Mittelwandteils 44 das Gehäuse der Einstelleinheit 10. Innerhalb dieses Gehäuses sind das wellenartige Element 14 mit dem Befestigungsabschnitt 14a, dem inneren Gewindeabschnitt 14b sowie dem äusseren Gewindeabschnitt 14c angeordnet. Durch den Befestigungsabschnitt 14a des wellenartigen Elements 14 hindurch verläuft im Übrigen auch die Schraubverbindung 5 für die Unterseite des Z-Profils 11a' (nicht gezeigt).

Koaxial zu dem wellenartigen Element 14 ist das kolbenartige Element 12 angeordnet, d.h. im Bereich von dem Aussengewindeabschnitt 14c bis maximal zu der Rückseite des Befestigungsabschnitts 14a des wellenartigen Elements 14. Das wellenartige Element 14 kann sich dabei (horizontal) gleitend innerhalb des kolbenartigen Elements 12 hin und her bewegen. Die Bewegung des kolbenartigen Elements 12 entlang der horizontalen Achse X₁ der Einstelleinheit 10 wird erreicht, indem die Mutter 52, welche durch die Scheibe 53 von dem kolbenartigen Element 12 getrennt ist, verdreht wird, sodass sich etwa bei einer Bewegung nach rechts das Mass M zwischen der Vorderkante des kolbenartigen Elements 12 und der Rückseite des Befestigungsabschnittes 14a des wellenartigen Element 14 grösser wird. Ein solches Mass M wird insbesondere für kleine Vorformlingsgrössen gewählt werden. Für grössere Vorformlingsgrössen wird, in **Fig. 6** veranschaulicht, das Mass M gegen Null gehen, d.h. der Befestigungsabschnitt 14a wird mit seiner Rückseite direkt an der Vorderkante des kolbenartigen Elements 12 anliegen.

Das kolbenartige Element 12 umfasst, wie zu sehen, einen Schaftteil 12a sowie einen Kolbenteil 12b. Der nach aussen gerichtete Bereich des Schaftteils 12a des kolbenartigen Elements 12 wird jedenfalls zum Teil koaxial von einem Hubeinstellelement 17 umschlossen, welches wiederum koaxial zu dem wellenartigen Element 14 der horizontalen Achse X₁ sowie dem kolbenartigen Element 12 angeordnet ist. Das Hubeinstellelement 17 bildet an seiner Aussenseite zusammen mit dem Kunststoffdeckel 51 den in **Fig. 7** gezeigten Drehknopf 41. Da das Hubeinstellelement 17 über einen Gewindeabschnitt 17a verfügt, welcher mit einem korrespondierenden Gewindeabschnitt 8a des Aussenwandteils 8 zusammenwirkt, kann das Hubeinstellelement 17 horizontal relativ zu dem kolbenartigen Element 12 sowie zu dem wellenartigen Element 14 verstellt werden.

Zwischen dem Aussenwandungsteil 8 und dem Innenwandungsteil 9 sowie der Ober- und Unterseite des Mittelwandteils 42, 43 wird innerhalb der Einstelleinheit 10 eine Luftkammer ausgebildet, welche von dem Kolbenteil 12b des kolbenartigen Elements 12 unterteilt wird in eine erste (linke) Luftkammerseite 13a sowie eine zweite (rechte) Luftkammerseite 13b. Das Innenwandungsteil 9 bildet dabei einen inneren beziehungsweise zweiten Anschlag 16 für das Kolbenteil 12b und das Hubeinstellelement 17 bildet einen äusseren bzw. ersten Anschlag 15 für das Kolbenteil 12b aus. Der äussere beziehungsweise erste Anschlag 15 wird insbesondere gebildet durch die Stirnseite des Hubeinstellelements 17 und kann aufgrund der Gewindeverbindung 17a mit dem Aussenwandungsteil 8 bzw. dessen Gewindeabschnitt 8a in horizontaler Richtung verstellt werden. Auf diese Weise kann der Hub zum Umstellen von einer Vorformlingsgrösse auf eine andere Vorformlingsgrösse variabel gestaltet werden.

Gemäss **Fig. 5** ist das Hubeinstellelement 17 mit dem ersten Anschlag 15 weit in die erste Luftkammerseite 13a hineingeschraubt, sodass der verbleibende Hub für das Kolbenteil 12b minimal ist, was vorliegend durch Hₘᵢₙ bezeichnet wird. Das Kolbenteil 12b liegt im Übrigen am zweiten Anschlag 16 des Innenwandungsteils 9 an. Gemäss **Fig. 6** ist hingegen das Hubeinstellelement 17 mit dem ersten Anschlag 15 fast vollständig aus der ersten Luftkammerseite 13a herausgeschraubt, sodass sich für das Kolbenteil 12b ein maximaler Hub (Hₘₐₓ) in Richtung des zweiten Anschlags 16 am Innenwandungsteil 9 ergibt. Sowohl die erste Luftkammerseite 13a als auch die zweite Luftkammerseite 13b weist einen Einlass für die zur Ausführung eines Kolben-Hubs notwendige Druckluft D auf (die Einlässe sind vorliegend schematisch durch die vertikalen Pfeile bezeichnet).

Damit das kolbenartige Element 12 auch gut gegenüber dem Hubeinstellelement 17 sowie dem Innenwandungsteil 9 bewegt werden kann, sind jeweils Gleitringe 49 und 50 vorgesehen. Am inneren Ende des Befestigungsabschnitts 14a des wellenartigen Elements 14 erkennt man ausserdem den nach innen gerichteten Gewindeabschnitt 14b, welcher, wie etwa in **Fig. 2** gezeigt, dazu dient eine Mutter 6 aufzunehmen, mit welcher der mittlere Teil des Z-Profils 11a' befestigt werden kann. Der untere Teil des Z-Profils 11a wird, wie ebenfalls in **Fig. 2** zu sehen, über die Schraubverbindung 5 am Befestigungsabschnitt 14a befestigt.

Die Feder 19, welche sich an dem Hülsenelement 18 sowie an dem Befestigungsabschnitt 14a abstützt, sorgt im Übrigen für die notwendige Vorspannung zwischen dem kolbenartigen Element 12 und dem wellenartigen Element 14. Bei der in **Fig. 5** gezeigten Stellung kann durch das Aufbringen von Druckluft D in die zweite Luftkammerseite 13b der minimale Hub Hₘᵢₙ ausgelöst werden, um einen (eher kleinen) Grössenunterschied bei den aufeinanderfolgenden Vorformlingen zu bewerkstelligen. Bei der in **Fig. 6** gezeigten Stellung kann durch Beaufschlagung der ersten Luftkammerseite 13a mit Druckluft ein maximaler Hub Hₘₐₓ ausgelöst werden, um eine Umstellung von einer relativ grossen Vorformlingsgrösse auf eine deutlich kleinere Vorformlingsgrösse zu bewerkstelligen.

Ingesamt können somit erfindungsgemäss sowohl der Hub H als auch das Abstandsmass M von einer Bedienperson von der Aussenseite der Einstelleinheit 10 her auf einfache Weise verändert werden, was sowohl eine hohe Variabilität hinsichtlich der jeweiligen Vorformlingsgrössen gewährleistet als auch eine zeitlich sehr schnelle Umstellung von einer auf die andere (bzw. nächste) Vorformlingsgrösse.

Die **Fig. 7** veranschaulicht nochmal eine Frontaleinsicht zweier Einstelleinheiten 10 sowie einer Höhenverstellvorrichtung 20 und zwar in montierter Position an der Halterungsstange 36. Am oberen Ende der Halterungsstange 36 befindet sich wiederum die Querstrebe 37 mit der darauf angeordneten Befestigungsvorrichtung 39. Am anderen Ende der Halterungsstange 36 ist wiederum der Kopfschutz 40 mit einem abgerundeten freien Ende zu erkennen. Aussen an den beiden Einstelleinheiten 10 ist die pneumatische Versorgungseinrichtung 3 mittels der Schrauben 3a angeschraubt. Auf der Oberseite der pneumatischen Versorgungseinrichtung 3 befindet sich wiederum der Druckluftanschluss 4. Die beiden Einstelleinheiten 10 umfassen insbesondere den Drehknopf 41, welcher auf seiner äusseren Fläche - wie im Zusammenhang mit **Fig. 5 und 6** beschrieben - durch den Kunststoffdeckel 51 gebildet wird. Damit das Hubeinstellelement 17 nicht vollständig aus dem Gewinde Abschnitt 8a des Aussenwandungsteils 8 herausgedreht werden kann (vgl. **Fig. 5 und 6**), ist vorsorglich noch eine Sicherheitsschraube 46 mit einer entsprechenden Unterlegscheibe vorgesehen, wobei die Unterlegscheibe praktisch an den Drehknopf 41 angrenzt (und so den Gewindeabschnitt 17a des Hubeinstellelements 17 nach aussen hin blockiert). Die Höhenverstellvorrichtung 20 weist im Übrigen einen Drehknopf 42 auf, dessen jeweilige Stellung vermittels einer Digitalanzeige 45 angezeigt wird.

In **Fig. 8** wird schliesslich noch eine Detailansicht der nicht erfindungsgemässen Höhenverstellvorrichtung 20 illustriert. In der dargestellten Ausführungsform wird die entsprechende Höhenführungseinheit 22 allerdings nicht durch ein C-Profil gebildet, sondern durch eine Halterung für ein Gestänge 22a - was aber für die Funktionsweise der Höhenverstellvorrichtung 20 keine Rolle spielt. Die Höhenführungseinheit 22 ist wiederum über die Schwenkachse S₂ an dem Hebelarm 21 angelenkt. Der Hebelarm 21 ist seinerseits über die Schwenkachse S₁ schwenkbar an dem Basisteil 48 der Höhenverstellvorrichtung 20 gelagert. Das Basisteil 48 ist seinerseits über die Befestigungsvorrichtung 35 an dem Aussenteil 47 der Höhenverstellvorrichtung 20 montiert. An dem Aussenteil 47 ist der Drehknopf 42 angeordnet welcher, wie zu sehen, um eine Mutter 32 herum gespritzt ist, wobei die Mutter 32 den Endabschnitt einer Längsverstelleinrichtung 28 (bzw. eines Längsverstellschafts) bildet. Die Längsverstelleinrichtung 28 (bzw. der Längsverstellschaft) vermittels einer Führungshülse 33 durch das Aussenteil 47 sowie durch das Basisteil 48 hindurchgeleitet.

Auf der Aussenseite der Längsverstelleinrichtung 28 bzw. des Längsverstellschafts ist zunächst ein erstes Kugelkopfelement 23 angeordnet (d.h. separat von der Führungshülse 33), wobei an dem kugelkopfseitigem Ende des ersten Kugelkopfelements 23 eine Scheibe 26 angeordnet ist, welche ihrerseits an der Aussenseite des U-förmigen Bügels 25 anliegt. Auf der anderen Seite U-förmigen Bügels 25 ist wiederum eine Scheibe 27 angeordnet, welche ihrerseits als Unterlage für das zweite Kugelkopfelement 24 dient, welches fest am freien Ende der Längsverstelleinrichtung 28 angebracht ist (hier mittels einer Mutter 54 befestigt).

Innerhalb des U-förmigen Bügels 25 ist ein Gleitteil 31 angeordnet, welches von einem Dorn 30 gehalten wird. Der U-förmige Bügel 25 ist vermittels der Schraube 34 an dem Hebelarm 21 befestigt. Die Höhenverstellvorrichtung 20 ist als Ganzes an der Halterungsstange 36 montiert, an deren oberen Ende wiederum die Querstrebe 37 angeschraubt ist. Zwischen dem Basisteil 48 und einem hinteren Anschlag des ersten Kugelkopfelements ist eine Feder 29 angeordnet, welche für eine Vorspannung des ersten Kugelkopfelements 23 gegenüber der Längsverstelleinrichtung 28 sowie dem angeschlossenen Drehknopf 42 sorgt.

Wird nun die Längsverstelleinrichtung 28 vermittels des Drehknopfes 42 in horizontaler Richtung nach rechts beziehungsweise nach innen gedreht, löst sich das zweite Kugelkopfelement 24 sowie dessen zugehörige Scheibe 27 etwas vom U-förmigen Bügel 25 ab, was zur Folge hat, dass aufgrund der Federkraft, welche auf das erste Kugelkopfelement 23 wirkt, sich die Scheiben 26 und 27 auf den zugehörigen Kugelkopfoberflächen (gleitend) schräg stellen und es zu einem Verkippen des U-förmigen Bügels bei einer gleichzeitigen Aufwärtsbewegung desselben kommt. Hierdurch wird wiederum die Schwenkbewegung des Hebelarms 21 um die Schwenkachse S1 bewirkt, welche wiederum die vertikale Aufwärtsbewegung der Höhenführungseinheit 22 zur Folge hat. Die Bewegung der Längsverstelleinrichtung 28 wird dabei mit dem Pfeil P_{H} bezeichnet, die Vertikalbewegung der Höhenführungseinheit 22 beziehungsweise der zweiten Schwenkachse S2 mit dem Pfeil P_{V} und die Kipp-/Schwenkbewegung des U-förmigen Bügels 25 mit dem Pfeil P_{K/S} bezeichnet.

Aufgrund der Lösung kann eine äusserst feinstufige Einstellung für verschieden hohe Mündungsöffnungen der entsprechenden Vorformlinge erzielt werden.

### Bezugszeichenliste:

- 1: Verstellsystem
- 2, 2': Vorformling
- 2a, 2a': Körper
- 2b, 2b': Kragen
- 3, 3': pneumatische Versorgungseinrichtung
- 3a, 3a': Schraube
- 4, 4': Druckluftanschluss
- 5, 5': Schraubverbindung Z-Profil
- 6, 6': Schraubverbindung Z-Profil
- 7, 7': Schraubverbindung L-Profil
- 8, 8': Aussenwandungsteil
- 8a, 8a': Gewindeabschnitt (Aussenwandungsteil)
- 9, 9': Innenwandungsteil
- 10, 10': Einstelleinheit
- 11, 11': Führungsvorrichtung
- 11a, 11a': Z-Profil
- 11b, 11b': L-Profil (mit abgeknicktem Blech)
- 12, 12': kolbenartiges Element (bzw. Kolbenstange)
- 12a, 12a': Schaftteil
- 12b, 12b': Kolbenteil
- 13a, 13a': erste Luftkammerseite
- 13b, 13b': zweite Luftkammerseite
- 14, 14': wellenartiges Element
- 14a, 14a': Befestigungsabschnitt
- 14b, 14b': Gewindeabschnitt (innen)
- 14c, 14c': Gewindeabschnitt (aussen)
- 15, 15': erster Anschlag
- 16, 16': zweiter Anschlag
- 17, 17': Hubeinstellelement
- 17a, 17a': Gewindeabschnitt (Hubeinstellelement)
- 18, 18': Hülsenelement
- 19, 19': Feder (Einstelleinrichtung)
- 20: Höhenverstellvorrichtung
- 21: Hebelarm
- 21a: freies Ende Hebelarm
- 22: Höhenführungseinheit
- 22a: Gestänge (Halterung)
- 22b: C-Profil
- 23: erstes Kugelkopfelement
- 24: zweites Kugelkopfelement
- 25: U-förmiger Bügel
- 26: Scheibe
- 27: Scheibe
- 28: Längsverstelleinrichtung
- 29: Feder (Längsverstelleinrichtung)
- 30: Dorn
- 31: Gleitteil
- 32: Mutter
- 33: Führungshülse
- 34: Schraube (U-förmiger Bügel)
- 35: Befestigungsvorrichtung (Basisteil)
- 36, 36': Halterungsstange
- 37: Querstrebe
- 38: Schraube
- 39: Befestigungsvorrichtung
- 40: Kopfschutz
- 41, 41': Drehknopf (Einstelleinheit)
- 42, 42': Drehknopf (Höhenverstellvorrichtung)
- 43, 43': Mittelwandteil (Oberseite)
- 44, 44': Mittelwandteil (Unterseite)
- 45, 45': Digitalanzeige
- 46, 46': Sicherheitsschraube (mit Unterlegscheibe)
- 47: Aussenteil Höhenverstellung
- 48: Basisteil Höhenverstellvorrichtung
- 49, 49': Gleitring (Hubeinstellelement)
- 50, 50': Gleitring (Innenwandungsteil)
- 51, 51': Kunststoffdeckel
- 52, 52': Mutter
- 53, 53': Scheibe
- Aₘᵢₙ: minimaler Abstand
- Aₘₐₓ: maximaler Abstand
- D: Druckluft
- hₘᵢₙ: minimale Höhe
- hₘₐₓ: maximale Höhe
- Hₘᵢₙ: minimaler Hub
- Hₘₐₓ: maximaler Hub
- M: Mass
- P_{H}: Horizontalbewegung
- P_{V}: Vertikalbewegung
- P_{K/S}: Kipp-/Schwenkbewegung
- S₁: Schwenkachse
- S₂: Schwenkachse
- X₁: horizontale Achse Einstelleinheit

## Patentansprüche

1. Verstellsystem zum Verstellen des gegenseitigen Abstands von zumindest zwei Führungsvorrichtungen (11, 11') für den Transport von etwa Vorformlingen (2) für Kunststoffbehälter, wobei die zumindest zwei Führungsvorrichtungen (11, 11') jeweils mit einer Einstelleinheit (10, 10`) verbunden sind, wobei die Einstelleinheit (10, 10`) zumindest jeweils ein kolbenartiges Element (12, 12') umfasst, welches auf pneumatische Weise zwischen einem ersten Anschlag (15, 15') und einem zweiten Anschlag (16, 16') innerhalb der Einstelleinheit (1) hin und her bewegbar ist, wobei die Einstelleinheit (10, 10`) jeweils eine Luftkammer (13a, 13b; 13a`, 13b`) definiert, in welcher jedenfalls Teile des kolbenartigen Elements (12, 12') beweglich gelagert sind, wobei die Einstelleinheit (10, 10`) jeweils ein wellenartiges Element (14, 14') aufweist, an welchem jeweils die Führungsvorrichtung (11, 11') montiert ist, **dadurch gekennzeichnet, dass** zumindest einer der beiden Anschläge (15a, 15a'; 16, 16a') der Einstelleinheit (10, 10') verstellbar ausgebildet ist und das nach aussen hin liegende Ende des wellenartigen Elements (14, 14') einen Aussengewindeabschnitt (14c) aufweist, welcher mit einem korrespondierenden Gewindeabschnitt einer Mutter (52) zusammenwirkt, welche auf das nach aussen hin liegende Ende des wellenartigen Elements (14) aufgebracht ist, wobei die Mutter (52) von aussen her betätigbar ist und das wellenartige Element (14) so horizontal relativ zu dem kolbenartigen Element (12, 12') verstellbar ist, wobei ein Mass (M) gegenüber dem kolbenartigen Element (12, 12') einstellbar ist, wobei das kolbenartige Element (12, 12') in Form einer Kolbenstange ausgebildet ist, welche einen Schaftteil (12a, 12a') und einen Kolbenteil (12b, 12b') aufweist und wobei der Schaftteil (12a, 12a') des kolbenartigen Elements (12, 12') einen Hohlschaft aufweist, welcher das wellenartige Element (14, 14') jedenfalls teilweise umgibt.

2. Verstellsystem gemäss Anspruch 1, **dadurch gekennzeichnet, dass** insbesondere der Kolbenteil (12b, 12b') der Kolbenstange (12, 12') die Luftkammer in eine erste Luftkammerseite (13a, 13a') und eine zweite Luftkammerseite (13b, 13b') unterteilt.

3. Verstellsystem gemäss Anspruch 2, **dadurch gekennzeichnet, dass** die erste (13a, 13a') und die zweite Luftkammerseite (13b, 13b`) jeweils mit einer pneumatischen Versorgungseinrichtung (3) verbunden sind.

4. Verstellsystem gemäss Anspruch 1, **dadurch gekennzeichnet, dass** der zumindest eine verstellbare Anschlag (15, 15') der Einstelleinheit (10, 10`) an einem Hubeinstellelement (17, 17') ausgebildet ist.

5. Verstellsystem gemäss Anspruch 4, **dadurch gekennzeichnet, dass** das Hubeinstellelement (17, 17') das kolbenartige Element (12, 12') und das wellenartige Element (14, 14') jedenfalls teilweise umgibt und relativ zu diesen beweglich ist.

6. Verstellsystem gemäss Anspruch 4, **dadurch gekennzeichnet, dass** das Hubeinstellelement (17, 17') und das kolbenartige Element (12, 12') gleitend zueinander beweglich sind.

7. Verstellsystem gemäss einem der vorhergehenden Ansprüche, **dadurch gekennzeichnet, dass** das kolbenartige Element (12, 12') an seinem der Führungsvorrichtung zugewandten Ende ein Hülsenelement (18, 18') aufweist.

8. Verstellsystem gemäss Anspruch 7, **dadurch gekennzeichnet, dass** zwischen dem Hülsenelement (18, 18') und einem dem Hülsenelement (18, 18') gegenüberliegenden Befestigungsabschnitt (14a, 14a') des wellenartigen Elements (14, 14') eine Feder (19, 19') angeordnet ist.

## Claims

1. Adjustment system for adjusting the mutual spacing of at least two guide devices (11, 11') for transporting, for instance, preforms (2) for plastics-material containers, wherein the at least two guide devices (11, 11') are in each case connected to one setting unit (10, 10'), wherein the setting unit (10, 10') comprises at least in each case one piston-type element (12, 12') which within the setting unit (1) is movable in a pneumatic and reciprocating manner between a first detent (15, 15') and a second detent (16, 16'), wherein the setting unit (10, 10') defines in each case one air chamber (13a, 13b; 13a', 13b') in which at least parts of the piston-type element (12, 12') are movably mounted, wherein the setting unit (10, 10') has in each case one shaft-type element (14, 14') on which the guide device (11, 11') is in each case assembled, **characterized in that** at least one of the two detents (15a, 15a'; 16, 16a') of the setting unit (10, 10') is adjustably configured and the outward end of the shaft-type element (14, 14') has an external thread portion (14c) which interacts with a communicating thread portion of a nut (52) which is attached to the outward end of the shaft-type element (14), wherein the nut (52) is activatable from the outside and the shaft-type element (14) is thus horizontally adjustable relative to the piston-type element (12, 12'), wherein a dimension (M) is capable of being set in relation to the piston-type element (12, 12'), wherein the piston-type element (12, 12') is configured in the form of a piston rod which has a shaft part (12a, 12a') and a piston part (12b, 12b') and wherein the shaft part (12a, 12a') of the piston-type element (12, 12') has a hollow shaft which at least partially surrounds the shaft-type element (14, 14').

2. Adjustment system according to Claim 1, **characterized in that** in particular the piston part (12b, 12b') of the piston rod (12, 12') subdivides the air chamber into a first air-chamber side (13a, 13a') and a second air-chamber side (13b, 13b').

3. Adjustment system according to Claim 2, **characterized in that** the first air-chamber side (13a, 13a') and the second air-chamber side (13b, 13b') are in each case connected to one pneumatic supply installation (3).

4. Adjustment system according to Claim 1, **characterized in that** the at least one adjustable detent (15, 15') of the setting unit (10, 10') is configured on a stroke-setting element (17, 17').

5. Adjustment system according to Claim 4, **characterized in that** the stroke-setting element (17, 17') at least partially surrounds and is movable relative to the piston-type element (12, 12') and the shaft-type element (14, 14').

6. Adjustment system according to Claim 4, **characterized in that** the stroke-setting element (17, 17') and the piston-type element (12, 12') are mutually movable in a sliding manner.

7. Adjustment system according to one of the preceding claims, **characterized in that** the piston-type element (12, 12') on the end thereof that faces the guide device has a sleeve element (18, 18').

8. Adjustment system according to Claim 7, **characterized in that** a spring (19, 19') is disposed between the sleeve element (18, 18') and a fastening portion (14a, 14a') of the shaft-type element (14, 14') that is opposite the sleeve element (18, 18').

## Revendications

1. Système de réglage permettant de régler la distance réciproque entre au moins deux dispositifs de guidage (11, 11') pour le transport par exemple de préformes (2) pour des récipients en plastique, dans lequel lesdits au moins deux dispositifs de guidage (11, 11') sont reliés respectivement à une unité de réglage (10, 10'), dans lequel l'unité de réglage (10, 10') comporte au moins respectivement un élément (12, 12') de type piston, lequel élément est déplaçable suivant un mouvement de va-et-vient de manière pneumatique entre une première butée (15, 15') et une deuxième butée (16, 16') à l'intérieur de l'unité de réglage (1), dans lequel l'unité de réglage (10, 10') définit respectivement une chambre à air (13a, 13b ; 13a', 13b') dans laquelle au moins des parties de l'élément (12, 12') de type piston sont montées de manière mobile, dans lequel l'unité de réglage (10, 10') comprend respectivement un élément (14, 14') de type arbre, sur lequel est monté respectivement le dispositif de guidage (11, 11'), **caractérisé en ce qu'**au moins l'une des deux butées (15a, 15a' ; 16, 16a') de l'unité de réglage (10, 10') est réalisée de manière déplaçable et l'extrémité, située vers l'extérieur, de l'élément (14, 14') de type arbre comprend une partie à filetage extérieur (14c), laquelle coopère avec une partie filetée correspondante d'un écrou (52), lequel est placé sur l'extrémité, située vers l'extérieur, de l'élément (14) de type arbre, l'écrou (52) pouvant être actionné depuis l'extérieur et l'élément (14) de type arbre étant ainsi déplaçable horizontalement par rapport à l'élément (12, 12') de type piston, une dimension (M) par rapport à l'élément (12, 12') de type piston étant réglable, l'élément (12, 12') de type piston étant réalisé sous la forme d'une tige de piston, laquelle comprend une partie queue (12a, 12a') et une partie piston (12b, 12b'), et la partie queue (12a, 12a') de l'élément (12, 12') de type piston comprenant une queue creuse, laquelle entoure au moins partiellement l'élément (14, 14') de type arbre.

2. Système de réglage selon la revendication 1, **caractérisé en ce qu'**en particulier la partie piston (12b, 12b') de la tige de piston (12, 12') divise la chambre à air en un premier côté de chambre à air (13a, 13a') et un deuxième côté de chambre à air (13b, 13b').

3. Système de réglage selon la revendication 2, **caractérisé en ce que** le premier (13a, 13a') et le deuxième côté de chambre à air (13b, 13b') sont respectivement reliés à un dispositif d'alimentation pneumatique (3).

4. Système de réglage selon la revendication 1, **caractérisé en ce que** ladite au moins une butée déplaçable (15, 15') de l'unité de réglage (10, 10') est formée sur un élément de réglage de course (17, 17').

5. Système de réglage selon la revendication 4, **caractérisé en ce que** l'élément de réglage de course (17, 17') entoure au moins partiellement l'élément (12, 12') de type piston et l'élément (14, 14') de type arbre, et est mobile par rapport à ceux-ci.

6. Système de réglage selon la revendication 4, **caractérisé en ce que** l'élément de réglage de course (17, 17') et l'élément (12, 12') de type piston sont mobiles l'un par rapport à l'autre de manière coulissante.

7. Système de réglage selon l'une des revendications précédentes, **caractérisé en ce que** l'élément (12, 12') de type piston comprend, à son extrémité tournée vers le dispositif de guidage, un élément douille (18, 18').

8. Système de réglage selon la revendication 7, **caractérisé en ce qu'**un ressort (19, 19') est disposé entre l'élément douille (18, 18') et une partie de fixation (14a, 14a'), opposée à l'élément douille (18, 18'), de l'élément (14, 14') de type arbre.
